# EUROPEAN PATENT APPLICATION

(11) **EP 4 395 328 A1**
(43) Date of publication of application: **03.07.2024**
(21) Application number: 22217046.6
(22) Date of filing: 28.12.2022
(51) Int. Cl.: H04N 21/234, G06F 16/13, G06V 20/40, G11B 20/00, H04L 9/32, H04L 9/00, H04N 21/24, H04N 21/254, H04N 21/8352, H04N 21/8358

(54) **METHOD AND SYSTEM FOR IDENTIFYING AN ILLICIT VIDEO STREAMING BROADCAST ON A NETWORK**

(30) Priority: 27.12.2022 PT 2022118435
(71) Applicant: NOS Inovação, S.A., 4460-191 Senhora da Hora (PT)
(72) Inventor: PINTO SEQUEIRA DOS SANTOS GRAÇA, Jorge Filipe, 4460-191 SENHORA DA HORA (PT); NUNES FERREIRA, João Miguel, 4460-191 SENHORA DA HORA (PT); MARQUES, Pedro, 4460-191 SENHORA DA HORA (PT); CORREIA RODRIGUES, Gonçalo, 4460-191 SENHORA DA HORA (PT)
(74) Representative: do Nascimento Gomes, Rui

(57) **Abstract**

The present application relates to a method and system for identifying illicit streaming video broadcasts on a network. It is disclosed a new way of identifying illegal distribution of video contents, that arises from the need to combat the threat that the growing phenomenon of illicit sharing of video content poses to video content producers, owners and distributors. The method includes (i.) obtaining a reference image from an original content provider, (ii.) capturing a video clip from a suspicious video streaming broadcast on a network, (iii.) processing each frame of the video clip to generate a correspondent frame hash value, (iv.) comparing hash values from each frame and from the reference image to determine a likelihood value and (v.) thresholding the likelihood value in order to identify/classify video streaming as illicit.

## Description

### TECHNICAL FIELD

The present application relates to discovering copyright material infringement, and in particularly to methods and systems for identifying illicit streaming video broadcasts on a network.

### PRIOR ART

Copyright infringement is a major problem on the Internet. Digital documents like Web pages, MP3 audio, video streaming content etc. are very easy to copy and put on a Web site. Since the internet has documents on line that are reaching billions of pages it is extremely hard for a publisher/content provider to track down sites which have infringed on an author's copyright by posting copies of the author's original work. More particularly, in recent years, there has been a continuous growth in the illicit sharing of video content online. In this context, the increase in infringements in the field of streaming of live sports events stands out. At the same time, there is an evolution in the methods of illegal distribution of video content, the diversification of distribution channels, as well as a change in the profile of consumers and the business models underlying the illicit distribution of video content, thus changing the entire video streaming ecosystem.

With the increasing evolution of the quality of video content and the availability of advanced streaming technologies, there is a greater ease and an increase in infringers who carry out illicit practices related to the illegal access and redistribution of multimedia content. It should be noted that the illegal sharing of any audio-visual content is the greatest threat to original content providers, that is, to producers of audio-visual content, distributors and operators of multimedia services, who directly or indirectly (through licensing agreements) own the content's copyright.

Currently, there is a wide variety of business models applied to the illegal provision of IPTV services. The distribution of illegal IPTV content ranges from large businesses, which involve selling thousands of monthly subscriptions, to individuals who only provide streaming access to multiple consumers via social media. In either case, the unifying element is the product, i.e. access to an illegal IPTV service, such as live TV channels. However, among the other illegal IPTV providers, the variability of the platform through which the available access to IPTV is enhanced, the target audience, pricing strategies and other elements, such as complementary products (video on demand, sale of decoders) and presence on social networks.

The state-of-the-art anti-piracy technological solutions have proved incapable of effectively mitigating the phenomenon of piracy of video streaming content. Indeed, the existing solutions fundamentally address the automatic identification of the illicit distribution of content exclusively through fingerprinting and watermarking techniques, which only detect disguised patterns in images/video through software embedded in set-top boxes. In this way, the use of such techniques (i) makes the efficient automatic identification of the illicit distribution of content unfeasible, (ii) limited exclusively to the detection of the set-top box that illicitly retransmits the content, that is not allowing the identification of the content being shared illegally and (iii) the Conditional Access of that operator, therefore (iv) preventing such anti-piracy solutions from being scalable.

Thus, existing solutions typically cover only some (s) phases of the content piracy mitigation cycle/process, requiring excessive need for human intervention in the process and significant investment in hardware.

The present solution intended to innovatively overcome such issues.

### SUMMARY OF THE APPLICATION

It is therefore an object of the present application a computer implemented method for performing illicit video streaming broadcast identification. Such method arises from the need to combat the threat that the growing phenomenon of illicit sharing of video content poses to video content producers, owners and distributors. In this context, the method of the present application therefore provides a new way of identifying illegal distribution of video contents that is significantly more efficient compared to the current paradigm.

In fact, validation of unstructured data, such as image and video, is a timeconsuming task, usually requiring human intervention. Whether the goal is to filter out content from unknown sources, or classify images as being part of stream, a mechanism is needed to reduce the cost and operational overhead of human validation. To solve this problem, the method of the present application compares a reference image related to video content being reproduced, obtained from an original content provider, against a video stream from any channel or content broadcaster, which then provides a normalized confidence level of the likelihood that the reference image is in those streams, in a specified time frame.

The present application also relates to a system for identifying an illicit video streaming broadcast on a network.

And, it is also an object of the present application a video content broadcast system.

### DESCRIPTION OF FIGURES

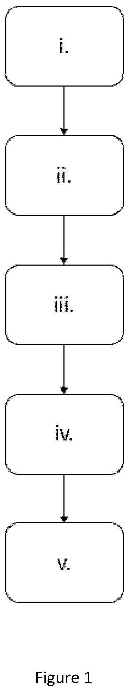

Figure 1 - representation of an embodiment of the computer implemented method described in the present application, wherein the reference signs represent:
   i. First method step for obtaining a reference image from an original content provider;
   ii. Second method step for capturing a video clip from a suspicious video streaming broadcast on a network;
   iii. Third method step for processing each frame of the video clip in order to generate a correspondent frame hash value;
   iv. Fourth method step for comparing hash values from each frame and from the reference image to determine a likelihood value;
   v. Fifth method step for thresholding the likelihood value in order to identify/classify a video streaming as illicit.

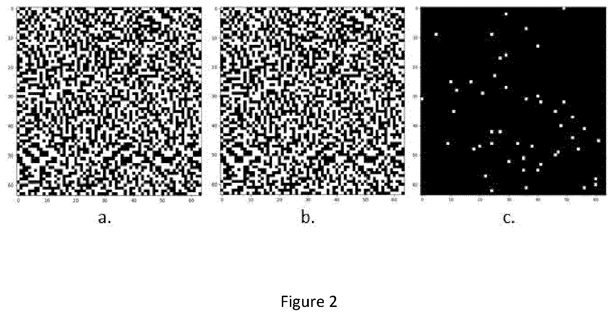

Figure 2 - visual representation of image hashing and comparison method steps, wherein the reference signs represent:
   a. Image hashing of the reference image obtained from the original content provider;
   b. Image hashing of the most similar video clip frame;
   c. Difference between both image hashing, forming the basis for calculating the likelihood value.

### DETAILED DESCRIPTION

The more general and advantageous configurations of the present application are described in the Summary. Such configurations are detailed below in accordance with other advantageous and/or preferred embodiments of implementation of the method and systems herein described.

The present application relates to a computer implemented method for identifying an illicit video streaming. The purpose is to identify video streams on a network, including the internet that, illegally, are broadcasting copyrighted video content. These video streams are typically broadcasted by unknown and unauthorized content providers that illegally access and redistribute multimedia content.

In a first step of the method, a reference image related to a video content being legally broadcasted is obtained from an original content provider, who directly or indirectly owns the content's copyright. Such reference image represents a video frame having a correspondent hash value. Said hash value may be computed using a hash algorithm, to assign a unique hash value to said reference image.

In a second step of the method, a video clip from a suspicious video streaming is captured. Suspicious video streaming shall be understood as streaming video over a network, such as the internet, that may be illegally broadcasting copyrighted video content. Thus, in the context of the method of the present application, a prior search over the network is made for video streams that are reproducing the same video content as the original content provider. Upon detection of a suspicious video stream, a video clip is captured, being comprised by a set of sequential video frames from said suspicious video stream.

Then, in a third step of the method, each frame of the captured video clip is processed in order to generate a correspondent frame hash value. The hash value may be computed using a hash algorithm, assigning to each frame a unique hash value.

In a fourth step of the method, a comparison is performed between the hash value of each frame of the video clip and the hash value of the reference image, in order to determine a likelihood value, representing the likelihood that a frame of the video clip is a duplicated copy of the reference image.

Since duplicated copies of an image have the exact same hash value, in a fifth step the method, the suspicious video streaming is identified as illicit, by thresholding the likelihood value obtained between at least one of the frames of the video clip and the reference image obtained from the original content provider.

In one embodiment of the method, the hash algorithm used to generate a video clip frame hash value is the average hash algorithm. Said algorithm implies:
- Reducing the image size and color of the frame;
- Determining an image average color value by computing mean image color;
- Computing image binary value, where grid values are activated by thresholding with the image average color;
- Computing the frame hash value by flatten the image binary value as a n²-bit integer.

More particularly, reducing the image size of the frame may relate to reducing high frequencies and/or to normalizing aspect ratio to 1:1. Additionally, reducing the image color of the frame may relate to converting to greyscale and/or to reducing total bit size by a factor of 3.

Alternatively, in another embodiment, the hash algorithm used to generate a video clip frame hash value is a perceptual hash algorithm. Said algorithm implies:
- Reducing the image size and color of the frame;
- Computing Discrete to Cosine transformations to separate the frame into a collection of frequencies and scalars;
- Applying a subsampling frequency step, by keeping the top left quadrant of the reduced image, which represents the lowest frequencies in the image;
- Determining an image average value by computing average image value of the kept subsample of frequencies, excluding the DC coefficient;
- Computing image binary value, where grid values are activated by thresholding with the image average value;
- Computing the frame hash value by flatten the image binary value of the image as a n²-bit integer.

More particularly, reducing the image size of the frame may relate to executing DCT computation and/or to normalizing aspect ratio to 1:1. Additionally, reducing the image color of the frame may relate to converting to greyscale.

In another embodiment the frame and the reference image hash values may be represented in hexadecimal numbering, as a hexadecimal string.

In another embodiment of the method, the step of comparing frames hash value to the hash value of the reference image is executed by computing the hamming distance between the two hash values. For that purpose, the hashes may have the same length. This is achieved through a normalization of the hash values, which can be performed during the hash value calculation step or before the comparison step takes place. The hamming distance may be computed according to the number of different bits approach or according to pair-wise approach.

In another embodiment of the method, the step of capturing a video clip from a suspicious video streaming may comprise:
- Obtaining reference time-frame information corresponding to the reference image;
- Parsing the suspicious video streaming in order to identify a frame window encompassing the reference time-frame;
- Capturing the video clip comprised by video frames contained in said frame window.

Through this processing step, it is guaranteed that the search for the reference image occurs in the appropriate video streaming segment (defined by the frame window), preventing the comparison from being carried out for the entire video streaming or for incorrect time-frame windows. As a consequence, the detection of illegal video streams is done more quickly.

In another embodiment of the method, the steps of obtaining a reference image of a video content being broadcast and capturing a video clip from a suspicious video streaming reproducing the same video content are executed periodically. This allows the detection mechanism herein described to be continuously operating, even if the video content being monitored changes.

In another embodiment of the method, the suspicious video streaming is identified as illicit if the likelihood value obtained between a frame of the video clip and the reference image obtained from the original content provider is above a pre-determined threshold value. More particularly, said frame corresponding to an image most similar to the reference image. A result of the comparison performed between reference image and video clip frame is illustrated in figure 2.

The present application also relates to a system for identifying an illicit video streaming broadcast on a network. Said system is comprised by one or more processors configured to implement the method herein described.

Finally, the present application also describes a Video content broadcast system. Said system may comprise:
- content providers, including original content providers, configured to broadcast video streaming;
- Client devices adapted to provide a viewer interface for a user watch a video streaming; and
- the system for identifying an illicit video streaming broadcast, already described.

More particularly, content providers, Client devices and the system for identifying an illicit video streaming broadcast are interconnected via a communication network, such as the internet.

Additionally, in the context of the present application, a Client device is intended to encompass set top boxes, satellite receivers, digital video recorders, and the like. A client device may also be embodied in software and/or hardware that facilitate the reception and display of events from a broadcast source of any suitable type (e.g., satellite, Internet protocol, wireless, etc.).

As will be clear to one skilled in the art, the method and systems of the present application should not be limited to the embodiments described herein, and a number of changes are possible which remain within the scope of the present application.

Of course, the preferred embodiments shown above are combinable, in the different possible forms, being herein avoided the repetition all such combinations.

## Claims

1. Computer implemented method for identifying an illicit video streaming on a network, comprising:
i. Obtaining from an original content provider a reference image of a video content being broadcast; said reference image having a correspondent hash value;
ii. Capturing a video clip from a suspicious video streaming reproducing the same video content, and segmenting said video clip into frames;
iii. Processing each frame by implementing a hash algorithm, in order to generate a correspondent frame hash value;
iv. Comparing the hash value of each frame of the video clip with the hash value of the reference image, in order to determine a likelihood value;
v. Identifying the suspicious video streaming from which the video clip was capture as illicit, by thresholding the likelihood value obtained between at least one of the frames of the video clip and the reference image obtained from the original content provider.

2. Method according to claim 1, wherein the hash algorithm used to generate a frame hash value is an average hash algorithm; and wherein said step of generating a frame hash value comprises:
- Reducing the image size and color of the frame;
- Determining an image average color value by computing mean image color;
- Computing image binary value, where grid values are activated by thresholding with the image average color;
- Computing the frame hash value by flatten the image binary value as a n²-bit integer.

3. Method according to claim 2, wherein reducing the image size of the frame relates to reducing high frequencies and/or to normalizing aspect ratio to 1:1.

4. Method according to claim 2 or 3, wherein reducing the image color of the frame relates to converting to greyscale and/or to reducing total bit size by a factor of 3.

5. Method according to claim 1, wherein the hash algorithm used to generate a frame hash value is a perceptual hash algorithm; and wherein the step of generating a frame hash value comprises:
- Reducing the image size and color of the frame;
- Computing Discrete to Cosine transformations to separate the frame into a collection of frequencies and scalars;
- Applying a subsampling frequency step, by keeping the top left quadrant of the reduced image, which represents the lowest frequencies in the image;
- Determining an image average value by computing average image value of the kept subsample of frequencies, excluding the DC coefficient;
- Computing image binary value, where grid values are activated by thresholding with the image average value;
- Computing the frame hash value by flatten the image binary value of the image as a n²-bit integer.

6. Method according to claim 5, wherein reducing the image size of the frame relates to executing DCT computation and/or to normalizing aspect ratio to 1:1.

7. Method according to claim 5 or 6, wherein reducing the image color of the frame relates to converting to greyscale.

8. Method according to any of the previous claims, wherein the frame and the reference image hash values are represented in hexadecimal numbering.

9. Method according to any of the previous claims, wherein the step of comparing frames hash value to the hash value of the reference image is executed by computing the hamming distance between the two hash values; the hashes having a same length.

10. Method according to claim 9, wherein the hamming distance is computed according to the number of different bits approach or according to pair-wise approach.

11. Method according to any of the previous claims, wherein the step of capturing a video clip from a suspicious video streaming comprises:
- Obtaining reference time-frame information corresponding to the reference image;
- Parsing the suspicious video streaming in order to identify a frame window encompassing the reference time-frame;
- Capturing the video clip comprised by video frames contained in said frame window.

12. Method according to any of the previous claims, wherein the steps of obtaining a reference image of a video content being broadcast and capturing a video clip from a suspicious video streaming reproducing the same video content are executed periodically.

13. Method according to any of the previous claims, wherein the suspicious video streaming is identified as illicit if the likelihood value obtained between a frame of the video clip and the reference image obtained from the original content provider is above a pre-determined threshold value; said frame corresponding to an image most similar to the reference image.

14. System for identifying an illicit video streaming broadcast on a network, comprising one or more processors configured to implement the method of any of the previous claims 1 to 13.

15. Video content broadcast system comprising:
- content providers, including original content providers, configured to broadcast video streaming;
- Client devices adapted to provide a viewer interface for a user watch a video streaming; and
- the system for identifying an illicit video streaming broadcast, according to claim 14;
wherein,
video content providers, Client devices and the system for identifying an illicit video streaming broadcast are interconnected via a communication network.
